# EUROPEAN PATENT APPLICATION

(11) **EP 3 533 680 A1**
(43) Date of publication of application: **04.09.2019**
(21) Application number: 16920006.0
(22) Date of filing: 26.11.2016
(51) Int. Cl.: B60W 30/14, B60W 30/09, B60W 10/18, B60W 10/20, B60R 21/0134, G01C 21/26, B60W 50/00

(54) **AUTONOMOUS VEHICLE AND OPERATING METHOD FOR AUTONOMOUS VEHICLE**

(30) Priority: 28.10.2016 KR 20160142208
(71) Applicant: LG Electronics Inc., Seoul 07336 (KR)
(72) Inventor: KIM, Jeongsu, Seoul 06772 (KR); NOH, Taeho, Seoul 06772 (KR); LEE, Seongho, Seoul 06772 (KR); LEEM, Chaehwan, Seoul 06772 (KR)
(74) Representative: Vossius & Partner Patentanwälte Rechtsanwälte mbB
(86) International application number: PCT/KR2016/013742
(87) International publication number: WO 2018/079919

(57) **Abstract**

Disclosed is an autonomous vehicle, including: an object detection apparatus configured to detect an object in a vicinity of the vehicle; a vehicle drive apparatus configured to control driving of at least one of a power source, a brake apparatus, or a steering apparatus in the vehicle; and a controller configured to acquire motion information of the object, and provide a signal to the vehicle drive apparatus based on the motion information to control driving of the at least one of the power source, the brake apparatus, or the steering apparatus.

## Description

### [Technical Field]

The present invention relates to an autonomous vehicle and an operating method thereof.

### [Background Art]

A vehicle is an apparatus that moves in a direction desired by a user riding therein.

A representative example of a vehicle is an automobile. A variety of sensors and electronic devices are mounted in vehicles for convenience of a user who uses the vehicle. In particular, for driving convenience, an Advanced Driver Assistance System (ADAS) has been actively studied. In addition, enormous efforts have been being made to develop autonomous vehicles.

A plurality of vehicles travel on a road way. In some cases, an accident by one vehicle may cause a series of car crashes.

For an autonomous vehicle, it is necessary to minimize a probability of occurrence of an accident, by controlling the autonomous vehicle to operate based on motion of an object expected not to be directly involved in an accident for the host vehicle. In addition, it is necessary to minimize a possibility of occurrence of an accident, by controlling the host vehicle to operate based on motion of an object not expected to be directly involved in an accident, but expected to cause a secondary accident.

### [Disclosure]

### [Technical Problem]

In order to address the aforementioned problem, an object of the present invention is to provide an autonomous vehicle driven based on motion information of an object.

It is another object of the present invention to provide an operating method of an autonomous vehicle controlling driving of at least one of a power source, a brake apparatus, or a steering apparatus based on motion information of an object.

Objects of the present invention should not be limited to the aforementioned objects and other unmentioned objects will be clearly understood by those skilled in the art from the following description.

### [Technical Solution]

In order to achieve the aforementioned objects, the present invention provides an autonomous vehicle including: an object detection apparatus configured to detect an object in a vicinity of the vehicle; a vehicle drive apparatus configured to control driving of at least one of a power source, a brake apparatus, or a steering apparatus in the vehicle; and a controller configured to acquire motion information of the object, and provide a signal to the vehicle drive apparatus based on the motion information to control driving of the at least one of the power source, the brake apparatus, or the steering apparatus.

An operating method of an autonomous vehicle according to an embodiment of the present invention includes: detecting an object in a vicinity of the vehicle; acquiring motion information of the object; and controlling driving of at least one of a power source, a brake apparatus, and a steering apparatus based on the motion information.

The details of other embodiments are included in the following description and the accompanying drawings.

### [Advantageous Effects]

According to embodiments of the present invention, there are advantageous effects as follows.

First, it is possible to prevent an accident for an autonomous vehicle by controlling the autonomous vehicle based on motion of a detected object.

Second, it is possible to prevent injuries and property damages by controlling an autonomous vehicle to prevent a plurality of detected objects from colliding.

Third, it is possible to prevent an autonomous vehicle from being involved in a secondary accident, by preventing an accident of a different vehicle.

Effects of the present invention are not limited to those described above and other effects of the present invention will be apparent to those skilled in the art from the following descriptions. The scope of the claims is not limited to the aforementioned effects.

### [Description of Drawings]

FIG. 1 is a view of the external appearance of a vehicle according to an embodiment of the present invention.
FIG. 2 is different angled views of a vehicle according to an embodiment of the present invention.
FIGS. 3 and 4 are views of the internal configuration of a vehicle according to an embodiment of the present invention.
FIGS. 5 and 6 are views for explanation of objects according to an embodiment of the present invention.
FIG. 7 is a block diagram referred to in the description of a vehicle according to an embodiment of the present invention.
FIG. 8 is a block diagram referred to in the description of an autonomous vehicle according to an embodiment of the present invention.
FIG. 9 is a flowchart referred to in the description of operation of an autonomous vehicle according to an embodiment of the present invention.
FIG. 10 is a flowchart referred to in the description of operation of an autonomous vehicle according to an embodiment of the present invention.
FIGS.11A to 12 are diagrams illustrating situations referred to in the description of operation of an autonomous vehicle according to an embodiment of the present invention.
FIG. 13 is a flowchart referred to in the description of operation of an autonomous vehicle according to an embodiment of the present invention.
FIGS. 14A and 14B are diagrams illustrating situations referred to in the description of operation of an autonomous vehicle according to an embodiment of the present invention.
FIG. 15 is a flowchart referred to in the description of operation of an autonomous vehicle according to an embodiment of the present invention.
FIGS. 16A and 16B are diagrams illustrating situations referred to in the description of operation of an autonomous vehicle according to an embodiment of the present invention.
FIG. 17 is a diagram illustrating a situation referred to in the description of operation of an autonomous vehicle according to an embodiment of the present invention.
FIGS. 18A and 18B are diagrams illustrating situations referred to in the description of operation of an autonomous vehicle according to an embodiment of the present invention.

### [Best Mode]

Hereinafter, the embodiments disclosed in the present specification will be described in detail with reference to the accompanying drawings, and the same or similar elements are denoted by the same reference numerals even though they are depicted in different drawings and redundant descriptions thereof will be omitted. In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other. In addition, in the following description of the embodiments disclosed in the present specification, a detailed description of known functions and configurations incorporated herein will be omitted when it may make the subject matter of the embodiments disclosed in the present specification rather unclear. In addition, the accompanying drawings are provided only for a better understanding of the embodiments disclosed in the present specification and are not intended to limit the technical ideas disclosed in the present specification. Therefore, it should be understood that the accompanying drawings include all modifications, equivalents and substitutions included in the scope and sprit of the present invention.

It will be understood that although the terms "first," "second," etc., may be used herein to describe various components, these components should not be limited by these terms. These terms are only used to distinguish one component from another component.

It will be understood that when a component is referred to as being "connected to" or "coupled to" another component, it may be directly connected to or coupled to another component or intervening components may be present. In contrast, when a component is referred to as being "directly connected to" or "directly coupled to" another component, there are no intervening components present.

As used herein, the singular form is intended to include the plural forms as well, unless the context clearly indicates otherwise.

In the present application, it will be further understood that the terms "comprises", "includes," etc. specify the presence of stated features, integers, steps, operations, elements, components, or combinations thereof, but do not preclude the presence or addition of one or more other features, integers, steps, operations, elements, components, or combinations thereof.

A vehicle as described in this specification may include an automobile and a motorcycle. Hereinafter, a description will be given based on an automobile.

A vehicle as described in this specification may include all of an internal combustion engine vehicle including an engine as a power source, a hybrid vehicle including both an engine and an electric motor as a power source, and an electric vehicle including an electric motor as a power source.

In the following description, "the left side of the vehicle" refers to the left side in the forward driving direction of the vehicle, and "the right side of the vehicle" refers to the right side in the forward driving direction of the vehicle.

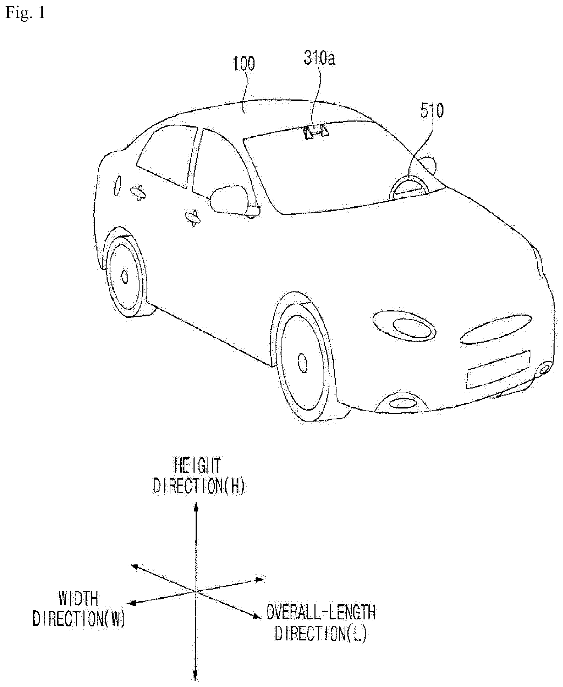

FIG. 1 is a view of the external appearance of a vehicle according to an embodiment of the present invention.

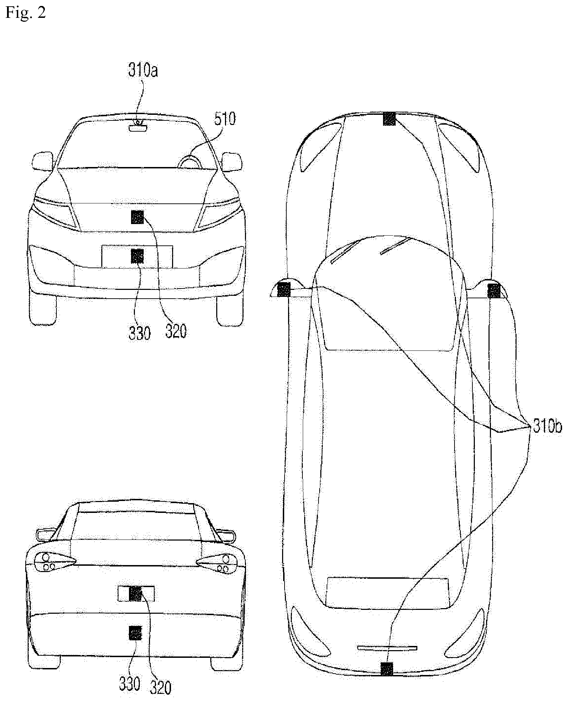

FIG. 2 is different angled views of a vehicle according to an embodiment of the present invention.

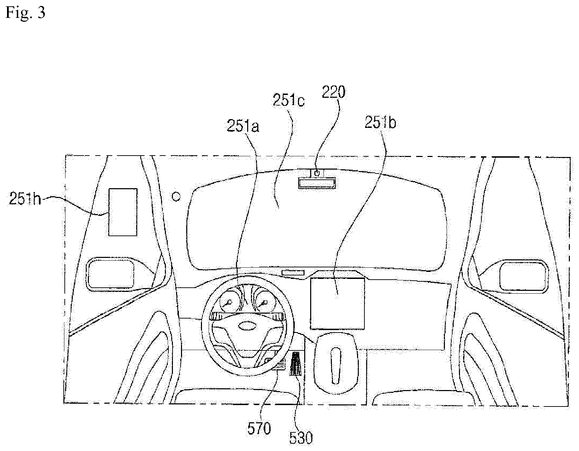

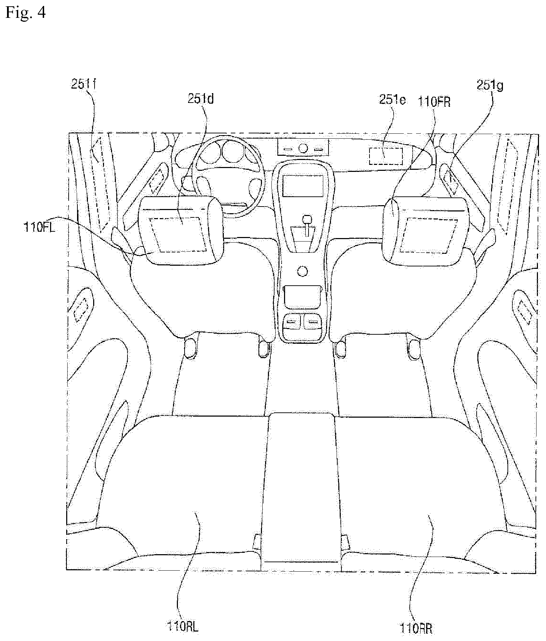

FIGS. 3 and 4 are views of the internal configuration of a vehicle according to an embodiment of the present invention.

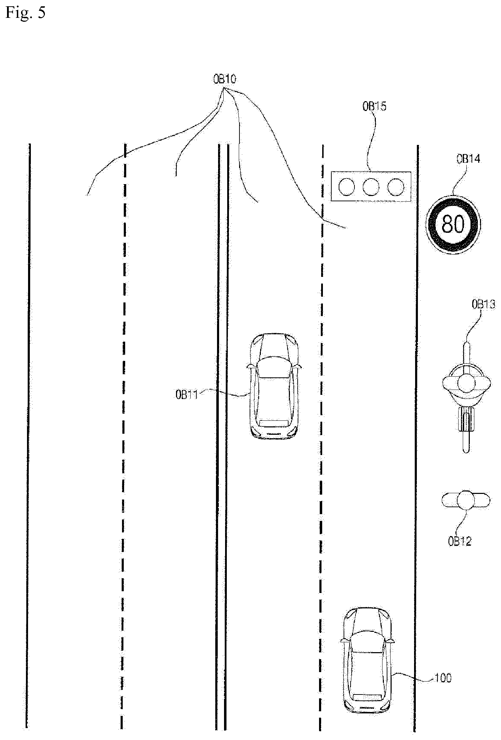

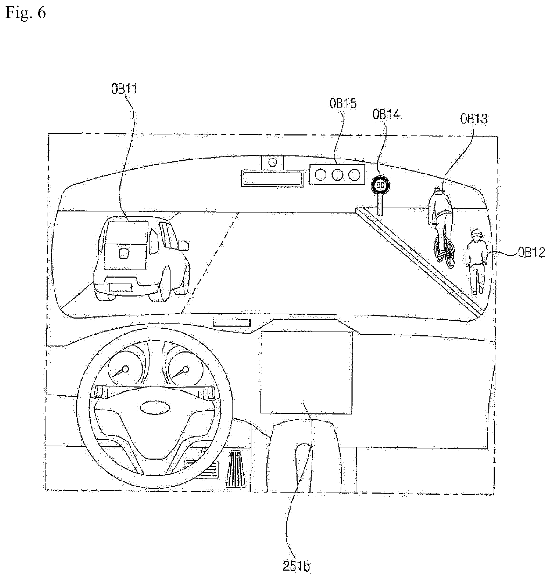

FIGS. 5 and 6 are views for explanation of objects according to an embodiment of the present invention.

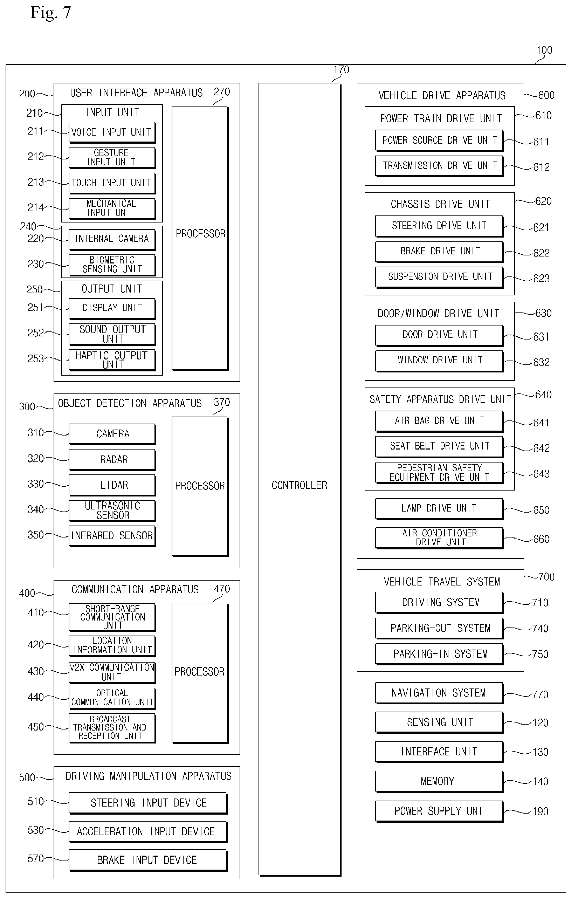

FIG. 7 is a block diagram referred to in the description of a vehicle according to an embodiment of the present invention.

Referring to FIGS. 1 to 7, a vehicle 100 may include a wheel rotating by a power source, and a steering input device 510 for controlling a driving direction of the vehicle 100.

The vehicle 100 may be an autonomous vehicle.

The vehicle 100 may be switched to an autonomous driving mode or a manual mode in response to a user input.

For example, in response to a user input received through a user interface device 200, the vehicle 100 may be switched from a manual mode to an autonomous driving mode, or vice versa.

The vehicle 100 may be switched to an autonomous mode or a manual mode based on driving situation information.

The driving situation information may include at least one of information on an object outside a vehicle, navigation information, and vehicle state information.

For example, the vehicle 100 may be switched from the manual mode to the autonomous driving mode, or vice versa, based on driving situation information generated in the object detection apparatus 300.

In another example, the vehicle 100 may be switched from the manual mode to the autonomous driving mode, or vice versa, based on driving situation information received through a communication apparatus 400.

The vehicle 100 may be switched from the manual mode to the autonomous driving mode, or vice versa, based on information, data, and a signal provided from an external device.

When the vehicle 100 operates in the autonomous driving mode, the autonomous vehicle 100 may operate based on a vehicle travel system 700.

For example, the autonomous vehicle 100 may operate based on information, data, or signals generated in a driving system 710, a parking-out system 740, and a parking-in system 750.

In the manual mode, the autonomous vehicle 100 may receive a user input for driving the vehicle 100 through a driving manipulation device 500. The vehicle 100 may operate based on the user input received through the driving manipulation device 500.

The term "overall length" means the length from the front end to the rear end of the vehicle 100, the term "overall width" means the width of the vehicle 100, and the term "overall height" means the height from the bottom of the wheel to the roof. In the following description, the term "overall length direction L" may mean the reference direction for the measurement of the overall length of the vehicle 100, the term "overall width direction W" may mean the reference direction for the measurement of the overall width of the vehicle 100, and the term "overall height direction H" may mean the reference direction for the measurement of the overall height of the vehicle 100.

As illustrated in FIG. 7, the vehicle 100 may include the user interface apparatus 200, the object detection apparatus 300, the communication apparatus 400, the driving manipulation apparatus 500, a vehicle drive apparatus 600, the vehicle travel system 700, a navigation system 770, a sensing unit 120, an interface 130, a memory 140, a controller 170, and a power supply unit 190.

In some embodiments, the vehicle 100 may further include other components in addition to the aforementioned components, or may not include some of the aforementioned components.

The user interface apparatus 200 is provided to support communication between the vehicle 100 and a user. The user interface apparatus 200 may receive a user input, and provide information generated in the vehicle 100 to the user. The vehicle 100 may enable User Interfaces (UI) or User Experience (UX) through the user interface apparatus 200.

The user interface apparatus 200 may include an input unit 210, an internal camera 220, a biometric sensing unit 230, an output unit 250, and a processor 270.

In some embodiments, the user interface apparatus 200 may further include other components in addition to the aforementioned components, or may not include some of the aforementioned components.

The input unit 210 is configured to receive information from a user, and data collected in the input unit 210 may be analyzed by the processor 270 and processed into a control command of the user.

The input unit 210 may be disposed inside the vehicle 100. For example, the input unit 210 may be disposed in a region of a steering wheel, a region of an instrument panel, a region of a seat, a region of each pillar, a region of a door, a region of a center console, a region of a head lining, a region of a sun visor, a region of a windshield, or a region of a window.

The input unit 210 may include a voice input unit 211, a gesture input unit 212, a touch input unit 213, and a mechanical input unit 214.

The voice input unit 211 may convert a voice input of a user into an electrical signal. The converted electrical signal may be provided to the processor 270 or the controller 170.

The voice input unit 211 may include one or more microphones.

The gesture input unit 212 may convert a gesture input of a user into an electrical signal. The converted electrical signal may be provided to the processor 270 or the controller 170.

The gesture input unit 212 may include at least one selected from among an infrared sensor and an image sensor for sensing a gesture input of a user.

In some embodiments, the gesture input unit 212 may sense a three-dimensional (3D) gesture input of a user. To this end, the gesture input unit 212 may include a plurality of light emitting units for outputting infrared light, or a plurality of image sensors.

The gesture input unit 212 may sense a 3D gesture input by employing a Time of Flight (TOF) scheme, a structured light scheme, or a disparity scheme.

The touch input unit 213 may convert a user's touch input into an electrical signal. The converted electrical signal may be provided to the processor 270 or the controller 170.

The touch input unit 213 may include a touch sensor for sensing a touch input of a user.

In some embodiments, the touch input unit 213 may be formed integral with a display unit 251 to implement a touch screen. The touch screen may provide an input interface and an output interface between the vehicle 100 and the user.

The mechanical input unit 214 may include at least one selected from among a button, a dome switch, a jog wheel, and a jog switch. An electrical signal generated by the mechanical input unit 214 may be provided to the processor 270 or the controller 170.

The mechanical input unit 214 may be located on a steering wheel, a center fascia, a center console, a cockpit module, a door, etc.

The internal camera 220 may acquire images of the inside of the vehicle 100. The processor 270 may sense a user state based on the images of the inside of the vehicle 100. The processor 270 may acquire information about a user's gaze from an image of the inside of the vehicle 100. The processor 270 may detect a user's gesture from an image of the inside of the vehicle 100.

The biometric sensing unit 230 may acquire biometric information of the user. The biometric sensing unit 230 may include a sensor for acquire biometric information of the user, and may utilize the sensor to acquire a user's finger print information, heart rate information, etc. The biometric information may be used to authenticate a user's identity.

The output unit 250 is configured to generate a visual, audio, or tactile output.

The output unit 250 may include at least one selected from among a display unit 251, a sound output unit 252, and a haptic output unit 253.

The display unit 251 may display graphic objects corresponding to various types of information.

The display unit 251 may include at least one selected from among a Liquid Crystal Display (LCD), a Thin Film Transistor-Liquid Crystal Display (TFT LCD), an Organic Light-Emitting Diode (OLED), a flexible display, a 3D display, and an e-ink display.

The display unit 251 may form an inter-layer structure together with the touch input unit 213, or may be integrally formed with the touch input unit 213 to implement a touch screen.

The display unit 251 may be implemented as a Head Up Display (HUD). When implemented as a HUD, the display unit 251 may include a projector module in order to output information through an image projected on a windshield or a window.

The display unit 251 may include a transparent display. The transparent display may be attached on the windshield or the window.

The transparent display may display a predetermined screen with a predetermined transparency. In order to achieve the transparency, the transparent display may include at least one selected from among a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display may be adjustable.

Meanwhile, the user interface apparatus 200 may include a plurality of display units 251a to 251g.

The display unit 251 may be disposed in a region of a steering wheel, a region 521a, 251b, or 251e of an instrument panel, a region 251d of a seat, a region 251f of each pillar, a region 251g of a door, a region of a center console, a region of a head lining, a region of a sun visor, a region 251c of a windshield, or a region 251h of a window.

The sound output unit 252 converts an electrical signal from the processor 270 or the controller 170 into an audio signal, and outputs the audio signal. To this end, the sound output unit 252 may include one or more speakers.

The haptic output unit 253 generates a tactile output. For example, the haptic output unit 253 may operate to vibrate a steering wheel, a safety belt, and seats 110FL, 110FR, 110RL, and 110RR so as to allow a user to recognize the output.

The processor 270 may control the overall operation of each unit of the user interface apparatus 200.

In some embodiments, the user interface apparatus 200 may include a plurality of processors 270 or may not include any processor 270.

In the case where the user interface apparatus 200 does not include any processor 270, the user interface apparatus 200 may operate under control of the controller 170 or a processor of a different device inside the vehicle 100.

Meanwhile, the user interface apparatus 200 may be referred to as a display device for vehicle.

The user interface apparatus 200 may operate under the control of the controller 170.

The object detection apparatus 300 is used to detect an object located outside the vehicle 100.

The object detection apparatus 300 may generate object information based on sensing data.

The object information may include information about the presence of an object, information about a location of the object, information about a distance between the vehicle 100 and the object, and information about a speed of the vehicle 100 relative to the object.

The object may include various objects related to travelling of the vehicle 100.

Referring to FIGS. 5 and 6, an object O may include a lane OB10, another vehicle OB11, a pedestrian OB12, a two-wheeled vehicle OB13, a traffic signal OB14 and OB15, a light, a road, a structure, a bump, a geographical feature, an animal, etc.

The lane OB10 may be a lane in which the vehicle 100 is traveling, a lane next to the lane in which the vehicle 100 is travelling, or a lane in which another vehicle is travelling in the opposite direction. The lane OB10 may include left and right lines that define the lane.

The another vehicle OB11 may be a vehicle travelling in the vicinity of the vehicle 100. The another vehicle OB11 may be a vehicle within a predetermined distance from the vehicle 100. For example, the another vehicle OB11 may be a vehicle that is preceding or following the vehicle 100.

The pedestrian OB12 may be a person located in the vicinity of the vehicle 100. The pedestrian OB12 may be a person located within a predetermined distance from the vehicle 100. For example, the pedestrian OB12 may be a person on a sidewalk or on the roadway.

The two-wheeled vehicle OB12 is a vehicle located in the vicinity of the vehicle 100 and moves with two wheels. The two-wheeled vehicle OB12 may be a vehicle that has two wheels within a predetermined distance from the vehicle 100. For example, the two-wheeled vehicle OB13 may be a motorcycle or a bike on a sidewalk or the roadway.

The traffic signal may include a traffic lamp OB15, a roadside sign OB14, and a pattern or text painted on a road surface.

The light may be light generated by a lamp provided in another vehicle. The light may be light generated by a street light. The light may be solar light.

The road may include a road surface, a curve, and slopes, such as an upward slope and a downward slope.

The structure may be an object located in the vicinity of a road and fixed onto the ground. For example, the structure may include a streetlight, a roadside tree, a building, a traffic light lamp, and a bridge.

The geographical feature may include a mountain and a hill.

The object may be classified as a moving object or a fixed object. For example, the moving object may be a concept including another vehicle and a pedestrian. For example, the fixed object may be a concept including a traffic signal, a roadway, and a structure.

The object detection apparatus 300 may include a camera 310, a radar 320, a lidar 330, an ultrasonic sensor 340, an infrared sensor 350, and a processor 370.

In some embodiments, the object detection apparatus 300 may further include other components in addition to the aforementioned components, or may not include some of the aforementioned components.

The camera 310 may be located at an appropriate position outside the vehicle 100 in order to acquire images of the outside of the vehicle 100. The camera 310 may be a mono camera, a stereo camera 310a, an Around View Monitoring (AVM) camera 310b, or a 360-degree camera.

Using various image processing algorithms, the camera 310 may acquire information on a location of an object, information on a distance to the object, and information on a speed relative to the object.

For example, the camera 310 may acquire the information on the distance to the object and the information on the speed relative to the object, based on a change in size of the object over time in acquired images.

For example, the camera 310 may acquire the information on the distance to the object and the information on the speed relative to the object through a pin hole model or through profiling a road surface.

In another example, the camera 310 may acquire the information on the distance to the object and the information on the speed relative to the object, based on information on disparity between stereo images acquired by the stereo camera 310a.

For example, the camera 310 may be disposed near a front windshield in the vehicle 100 in order to acquire images of the front of the vehicle 100. Alternatively, the camera 310 may be disposed in the vicinity of a front bumper or a radiator grill.

For example, the camera 310 may be disposed near a rear glass in the vehicle 100 in order to acquire images of the rear of the vehicle 100. Alternatively, the camera 310 may be disposed in the vicinity of a rear bumper, a trunk, or a tailgate.

For example, the camera 310 may be disposed near at least one of the side windows in the vehicle 100 in order to acquire images of the side of the vehicle 100. Alternatively, the camera 310 may be disposed in the vicinity of a side mirror, a fender, or a door.

The camera 310 may provide an acquired image to the processor 270.

The radar 320 may include an electromagnetic wave transmission unit and an electromagnetic wave reception unit. The radar 320 may be realized as a pulse radar or a continuous wave radar depending on the principle of emission of an electronic wave. In addition, the radar 320 may be realized as a Frequency Modulated Continuous Wave (FMCW) type radar or a Frequency Shift Keying (FSK) type radar depending on the waveform of a signal.

The radar 320 may detect an object through the medium of an electromagnetic wave by employing a time of flight (TOF) scheme or a phase-shift scheme, and may detect a location of the detected object, the distance to the detected object, and the speed relative to the detected object

The radar 320 may be located at an appropriate position outside the vehicle 100 in order to sense an object located in front of the vehicle 100, an object located to the rear of the vehicle 100, or an object located to the side of the vehicle 100.

The lidar 330 may include a laser transmission unit and a laser reception unit. The lidar 330 may be implemented by the TOF scheme or the phase-shift scheme.

The lidar 330 may be implemented as a drive-type lidar or a non-drive type lidar.

When implemented as the drive-type lidar, the lidar 330 may rotate by a motor and detect an object in the vicinity of the vehicle 100.

When implemented as the non-drive type lidar, the lidar 330 may utilize a light steering technique to detect an object located within a predetermined distance from the vehicle 100. The vehicle 100 may include a plurality of non-driving type lidars 330.

The lidar 330 may detect an object through the medium of laser light by employing the TOF scheme or the phase-shift scheme, and may detect a location of the detected object, the distance to the detected object, and the speed relative to the detected object.

The lidar 330 may be located at an appropriate position outside the vehicle 100 in order to sense an object located in front of the vehicle 100, an object located to the rear of the vehicle 100, or an object located to the side of the vehicle 100.

The ultrasonic sensor 340 may include an ultrasonic wave transmission unit and an ultrasonic wave reception unit. The ultrasonic sensor 340 may detect an object based on an ultrasonic wave, and may detect a location of the detected object, the distance to the detected object, and the speed relative to the detected object.

The ultrasonic sensor 340 may be located at an appropriate position outside the vehicle 100 in order to detect an object located in front of the vehicle 100, an object located to the rear of the vehicle 100, and an object located to the side of the vehicle 100.

The infrared sensor 350 may include an infrared light transmission unit and an infrared light reception unit. The infrared sensor 340 may detect an object based on infrared light, and may detect a location of the detected object, the distance to the detected object, and the speed relative to the detected object.

The infrared sensor 350 may be located at an appropriate position outside the vehicle 100 in order to sense an object located in front of the vehicle 100, an object located to the rear of the vehicle 100, or an object located to the side of the vehicle 100.

The processor 370 may control the overall operation of each unit of the object detection apparatus 300.

The processor 370 may detect or classify an object by comparing sensing data with pre-stored data, the sensing data which is sensed by the camera 310, the radar 320, the lidar 330, the ultrasonic sensor 340, and the infrared sensor 350.

The processor 370 may detect an object and track the detected object based on acquired images. The processor 370 may, for example, calculate the distance to the object and the speed relative to the object.

For example, based on change in size over time of a object in acquired images, the processor 370 may acquire information on distance to the object and information on speed relative to the object.

For example, the processor 370 may acquire information on distance to an object and information on speed relative to the object, by utilizing a pin hole model or by profiling a road surface.

For example, based on information on disparity of stereo images acquired by a stereo camera 310a, the camera 310 may acquire the information on distance to an object and information on speed relative to the object.

The processor 370 may detect and track an object based on a reflection electromagnetic wave which is formed as a result of reflection a transmission electromagnetic wave by the object. Based on the electromagnetic wave, the processor 370 may, for example, calculate the distance to the object and the speed relative to the object.

The processor 370 may detect and track an object based on a reflection laser light which is formed as a result of reflection of transmission laser by the object. Based on the laser light, the processor 370 may, for example, calculate the distance to the object and the speed relative to the object.

The processor 370 may detect and track an object based on a reflection ultrasonic wave which is formed as a result of reflection of a transmission ultrasonic wave by the object. Based on the ultrasonic wave, the processor 370 may, for example, calculate the distance to the object and the speed relative to the object.

The processor 370 may detect and track an object based on reflection infrared light which is formed as a result of reflection of transmission infrared light by the object. Based on the infrared light, the processor 370 may, for example, calculate the distance to the object and the speed relative to the object.

In some embodiments, the object detection apparatus 300 may include a plurality of processors 370 or may not include the processor 370. For example, each of the camera 310, the radar 320, the lidar 330, the ultrasonic sensor 340, and the infrared sensor 350 may include its own processor.

In the case where the object detection apparatus 300 is not included in the processor 370, the object detection apparatus 300 may operate under the control of the controller 170 or a processor inside the vehicle 100.

The object detection apparatus 400 may operate under the control of the controller 170.

The communication apparatus 400 is configured to perform communication with an external device. The external device may be another vehicle or a server.

To perform communication, the communication apparatus 400 may include at least one selected from a transmission antenna, a reception antenna, a Radio Frequency (RF) circuit capable of implementing various communication protocols, and an RF device.

The communication apparatus 400 may include a short-range communication unit 410, a location information unit 420, a V2X communication unit 430, an optical communication unit 440, a broadcast transmission and reception unit 450, an Intelligent Transport Systems (ITS) communication unit 460, and a processor 470.

In some embodiments, the communication apparatus 400 may further include other components in addition to the aforementioned components, or may not include some of the aforementioned components.

The short-range communication unit 410 is configured to perform short-range communication. The short-range communication unit 410 may support short-range communication using at least one selected from among BluetoothTM, Radio Frequency IDdentification (RFID), Infrared Data Association (IrDA), Ultra-WideBand (UWB), ZigBee, Near Field Communication (NFC), Wireless-Fidelity (Wi-Fi), Wi-Fi Direct, and Wireless USB (Wireless Universal Serial Bus).

The short-range communication unit 410 may form wireless area networks to perform short-range communication between the vehicle 100 and at least one external device.

The location information unit 420 is configured to acquire location information of the vehicle 100. For example, the location information unit 420 may include a Global Positioning System (GPS) module or a Differential Global Positioning System (DGPS) module.

The V2X communication unit 430 is configured to perform wireless communication between a vehicle and a server (that is, vehicle to infra (V2I) communication), wireless communication between a vehicle and a nearby vehicle (that is, vehicle to vehicle (V2V) communication), or wireless communication between a vehicle and a pedestrian (that is, vehicle to pedestrian(V2P) communication).

The optical communication unit 440 is configured to perform communication with an external device through the medium of light. The optical communication unit 440 may include a light emitting unit, which converts an electrical signal into an optical signal and transmits the optical signal to the outside, and a light receiving unit which converts a received optical signal into an electrical signal.

In some embodiments, the light emitting unit may be integrally formed with a lamp provided included in the vehicle 100.

The broadcast transmission and reception unit 450 is configured to receive a broadcast signal from an external broadcasting management server or transmit a broadcast signal to the broadcasting management server through a broadcasting channel. The broadcasting channel may include a satellite channel, and a terrestrial channel. The broadcast signal may include a TV broadcast signal, a radio broadcast signal, and a data broadcast signal.

The ITS communication unit 460 may exchange information, data, or signals with a traffic system. The ITS communication unit 460 may provide acquired information or data to the traffic system. The ITS communication unit 460 may receive information, data, or signals from the traffic system. For example, the ITS communication unit 460 may receive traffic information from the traffic system and provide the traffic information to the controller 170. In another example, the ITS communication unit 460 may receive a control signal from the traffic system, and provide the control signal to the controller 170 or a processor provided in the vehicle 100.

The processor 470 may control the overall operation of each unit of the communication apparatus 400.

In some embodiments, the communication apparatus 400 may include a plurality of processors 470, or may not include any processor 470.

In the case where the communication apparatus 400 does not include the processor 470, the communication apparatus 400 may operate under control of the controller 170 or a processor of a device inside of the vehicle 100.

Meanwhile, the communication apparatus 400 may implement a vehicle display device, together with the user interface apparatus 200. In this case, the vehicle display device may be referred to as a telematics device or an Audio Video Navigation (AVN) device.

The communication apparatus 400 may operate under the control of the controller 170.

The driving manipulation apparatus 500 is configured to receive a user input for driving the vehicle 100.

In the manual mode, the vehicle 100 may operate based on a signal provided by the driving manipulation apparatus 500.

The driving manipulation apparatus 500 may include a steering input device 510, an acceleration input device 530, and a brake input device 570.

The steering input device 510 may receive a user input with regard to the driving direction of the vehicle 100. The steering input device 510 may take the form of a wheel to enable a steering input through the rotation thereof. In some embodiments, the steering input device may be configured as a touchscreen, a touch pad, or a button.

The acceleration input device 530 may receive a user input for acceleration of the vehicle 100.

The brake input device 570 may receive a user input for deceleration of the vehicle 100. Each of the acceleration input device 530 and the brake input device 570 may take the form of a pedal. In some embodiments, the acceleration input device or the break input device may be configured as a touch screen, a touch pad, or a button.

The driving manipulation apparatus 500 may operate under the control of the controller 170.

The vehicle drive apparatus 600 is configured to electrically control the operation of various devices of the vehicle 100.

The vehicle drive apparatus 600 may include a power train drive unit 610, a chassis drive unit 620, a door/window drive unit 630, a safety apparatus drive unit 640, a lamp drive unit 650, and an air conditioner drive unit 660.

In some embodiments, the vehicle drive apparatus 600 may further include other components in addition to the aforementioned components, or may not include some of the aforementioned components.

Meanwhile, the vehicle drive apparatus 600 may include a processor. Each unit of the vehicle drive apparatus 600 may include its own processor.

The power train drive unit 610 may control the operation of a power train.

The power train drive unit 610 may include a power source drive unit 611 and a transmission drive unit 612.

The power source drive unit 611 may control a power source of the vehicle 100.

In the case in which a fossil fuel-based engine is the power source, the power source drive unit 610 may perform electronic control of the engine. The output torque of the engine may be controlled according thereto. The power source drive unit 611 may adjust the output toque of the engine under control of the controller 170.

In the case where an electric motor is the power source, the power source drive unit 610 may control the motor. The power source drive unit 610 may control, for example, the RPM and toque of the motor under control of the controller 170.

The transmission drive unit 612 may control a transmission.

The transmission drive unit 612 may adjust the state of the transmission. The transmission drive unit 612 may adjust a state of the transmission to a drive (D), reverse (R), neutral (N), or park (P) state.

Meanwhile, in the case where an engine is the power source, the transmission drive unit 612 may adjust a gear-engaged state to the drive position D.

The chassis drive unit 620 may control the operation of a chassis.

The chassis drive unit 620 may include a steering drive unit 621, a brake drive unit 622, and a suspension drive unit 623.

The steering drive unit 621 may perform electronic control of a steering apparatus provided inside the vehicle 100. The steering drive unit 621 may change the direction of travel of the vehicle 100.

The brake drive unit 622 may perform electronic control of a brake apparatus provided inside the vehicle 100. For example, the brake drive unit 622 may reduce the speed of the vehicle 100 by controlling the operation of a brake located at a wheel.

Meanwhile, the brake drive unit 622 may control a plurality of brakes individually. The brake drive unit 622 may apply a different degree-braking force to each wheel.

The suspension drive unit 623 may perform electronic control of a suspension apparatus inside the vehicle 100. For example, when the road surface is uneven, the suspension drive unit 623 may control the suspension apparatus so as to reduce the vibration of the vehicle 100.

Meanwhile, the suspension drive unit 623 may control a plurality of suspensions individually.

The door/window drive unit 630 may perform electronic control of a door apparatus or a window apparatus inside the vehicle 100.

The door/window drive unit 630 may include a door drive unit 631 and a window drive unit 632.

The door drive unit 631 may control the door apparatus. The door drive unit 631 may control opening or closing of a plurality of doors included in the vehicle 100. The door drive unit 631 may control opening or closing of a trunk or a tail gate. The door drive unit 631 may control opening or closing of a sunroof.

The window drive unit 632 may perform electronic control of the window apparatus. The window drive unit 632 may control opening or closing of a plurality of windows included in the vehicle 100.

The safety apparatus drive unit 640 may perform electronic control of various safety apparatuses provided inside the vehicle 100.

The safety apparatus drive unit 640 may include an airbag drive unit 641, a safety belt drive unit 642, and a pedestrian protection equipment drive unit 643.

The airbag drive unit 641 may perform electronic control of an airbag apparatus inside the vehicle 100. For example, upon detection of a dangerous situation, the airbag drive unit 641 may control an airbag to be deployed.

The safety belt drive unit 642 may perform electronic control of a seatbelt apparatus inside the vehicle 100. For example, upon detection of a dangerous situation, the safety belt drive unit 642 may control passengers to be fixed onto seats 110FL, 110FR, 110RL, and 110RR with safety belts.

The pedestrian protection equipment drive unit 643 may perform electronic control of a hood lift and a pedestrian airbag. For example, upon detection of a collision with a pedestrian, the pedestrian protection equipment drive unit 643 may control a hood lift and a pedestrian airbag to be deployed.

The lamp drive unit 650 may perform electronic control of various lamp apparatuses provided inside the vehicle 100.

The air conditioner drive unit 660 may perform electronic control of an air conditioner inside the vehicle 100. For example, when the inner temperature of the vehicle 100 is high, an air conditioner drive unit 660 may operate the air conditioner so as to supply cool air to the inside of the vehicle 100.

The vehicle drive apparatus 600 may include a processor. Each unit of the vehicle dive device 600 may include its own processor.

The vehicle drive apparatus 600 may operate under control of the controller 170.

The vehicle travel system 700 is a system for controlling the overall driving operation of the vehicle 100. The vehicle travel system 700 may operate in the autonomous driving mode.

The vehicle travel system 700 may include the driving system 710, the parking-out system 740, and the parking-in system 750.

In some embodiments, the vehicle travel system 700 may further include other components in addition to the aforementioned components, or may not include some of the aforementioned component.

Meanwhile, the vehicle travel system 700 may include a processor. Each unit of the vehicle travel system 700 may include its own processor.

Meanwhile, in some embodiments, in the case where the vehicle travel system 700 is implemented as software, the vehicle travel system 700 may be a subordinate concept of the controller 170.

Meanwhile, in some embodiments, the vehicle travel system 700 may be a concept including at least one selected from among the user interface apparatus 200, the object detection apparatus 300, the communication apparatus 400, the vehicle drive apparatus 600, and the controller 170.

The driving system 710 may control driving of the vehicle 100.

The driving system 710 may receive navigation information from the navigation system 700 and provide a control signal to the vehicle drive apparatus 600 so as to control driving of the vehicle 100.

The driving system 710 may receive object information from the object detection apparatus 300 and provide a control signal to the vehicle drive apparatus 600 to thereby control driving of the vehicle 100.

The driving system 710 may receive a signal from an external device via the communication apparatus 400 and provide a control signal to the vehicle drive apparatus 600 so as to control driving of the vehicle 100.

The parking-out system 740 may control exiting of the vehicle 100 from a parking space.

The parking-out system 740 may receive navigation information from the navigation system 770 and provide a control signal to the vehicle drive apparatus 600 so as to control exiting of the vehicle 100 from a parking space.

The parking-out system 740 may receive object information from the object detection apparatus 300 and provide a control signal to the vehicle drive apparatus 600 so as to control exiting of the vehicle 100 from a parking space.

For example, the parking-out system 740 may receive a signal from an external device via the communication apparatus 400 and provide a control signal to the vehicle drive apparatus 600 so as to control exiting of the vehicle 100 from a parking space.

The parking-in system 750 may control parking of the vehicle 100.

The parking-in system 750 may receive navigation information from the navigation system 770 and provide a control signal to the vehicle drive apparatus 600 so as to control parking of the vehicle 100.

The parking-in system 750 may receives object information from the object detection apparatus 300 and provide a control signal to the vehicle drive apparatus 600 so as to control parking of the vehicle 100.

The parking-in system 750 may receive a signal from an external device through the communication apparatus 400 and provide a control signal to the vehicle drive apparatus 600 so as to control parking of the vehicle 100.

The navigation system 770 may provide navigation information. The navigation information may include at least one selected from among map information, information on a set destination, information on a route to the set destination, information on various objects along the route, lane information, and information on a current location of the vehicle.

The navigation system 770 may include a memory and a processor. The memory may store navigation information. The processor may control the operation of the navigation system 770.

In some embodiments, the navigation system 770 may update pre-stored information by receiving information from an external device via the communication apparatus 400.

In some embodiments, the navigation system 770 may be classified as a subordinate element of the user interface apparatus 200.

The sensing unit 120 may sense the state of the vehicle. The sensing unit 120 may include an attitude sensor (i.e., a yaw sensor, a roll sensor, and a pitch sensor), a collision sensor, a wheel sensor, a speed sensor, a gradient sensor, a weight sensor, a heading sensor, a yaw sensor, a gyro sensor, a position module, a vehicle forward/reverse movement sensor, a battery sensor, a fuel sensor, a tire sensor, a steering sensor based on the rotation of the steering wheel, an in-vehicle temperature sensor, an in-vehicle humidity sensor, an ultrasonic sensor, an illumination sensor, an accelerator pedal position sensor, and a brake pedal position sensor.

The sensing unit 120 may acquire sensing signals with regard to, for example, vehicle attitude information, vehicle collision information, vehicle driving direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, out-of-vehicle illumination information, information about the pressure applied to an accelerator pedal, and information about the pressure applied to a brake pedal.

The sensing unit 120 may further include, for example, an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS).

The sensing unit 120 may generate vehicle state information based on sensing data. The vehicle state information may be information that is generated based on data sensed by a variety of sensors inside a vehicle.

For example, the vehicle state information may include vehicle position information, vehicle speed information, vehicle tilt information, vehicle weight information, vehicle direction information, vehicle battery information, vehicle fuel information, vehicle tire pressure information, vehicle steering information, in-vehicle temperature information, in-vehicle humidity information, pedal position information, vehicle engine temperature information, etc.

The interface 130 may serve as a passage for various kinds of external devices that are connected to the vehicle 100. For example, the interface 130 may have a port that is connectable to a mobile terminal and may be connected to the mobile terminal via the port. In this case, the interface 130 may exchange data with the mobile terminal.

Meanwhile, the interface 130 may serve as a passage for the supply of electrical energy to a mobile terminal connected thereto. When the mobile terminal is electrically connected to the interface 130, the interface 130 may provide electrical energy, supplied from the power supply unit 190, to the mobile terminal under control of the controller 170.

The memory 140 is electrically connected to the controller 170. The memory 140 may store basic data for each unit, control data for the operational control of each unit, and input/output data. The memory 140 may be any of various hardware storage devices, such as a ROM, a RAM, an EPROM, a flash drive, and a hard drive. The memory 140 may store various data for the overall operation of the vehicle 100, such as programs for the processing or control of the controller 170.

In some embodiments, the memory 140 may be integrally formed with the controller 170, or may be provided as an sub-element of the controller 170.

The controller 170 may control the overall operation of each unit inside the vehicle 100

The controller 170 may be referred to as an Electronic Control Unit (ECU).

The power supply unit 190 may supply power required to operate each component under control of the controller 170. In particular, the power supply unit 190 may receive power from, for example, a battery inside the vehicle 100.

One or more processors and thee controller 170 included in the vehicle 100 may be implemented using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

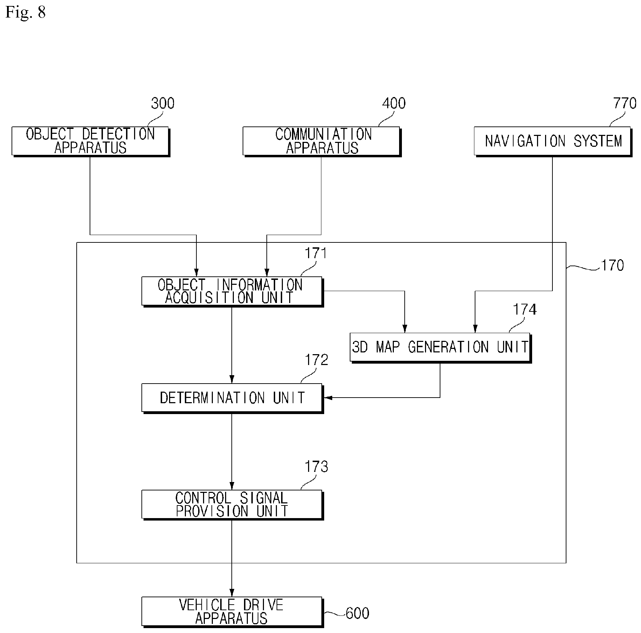

FIG. 8 is a block diagram referred to in the description of an autonomous vehicle according to an embodiment of the present invention.

An autonomous vehicle according to an embodiment of the present invention may be referred to as an apparatus for performing autonomous travel.

Referring to FIG. 8, an autonomous vehicle 100 may include an object detection apparatus 300, a vehicle drive apparatus 600, and a controller 170.

The object detection apparatus 300 may detect an object in the vicinity of the vehicle. The object detection apparatus 300 may generate object information and provide the object information.

The object information may include information on the presence of the object, location information of the object, information on a distance between the vehicle 100 and the object, and information on a relative speed between the vehicle 100 relative to the object.

The object detection apparatus 300 may detect a plurality of objects. In this case, the object information may include information on distances between the plurality of objects, information on speeds of the plurality of objects relative to one another, and Time to Collision (TTC) information of the plurality of objects.

For example, the object detection apparatus 300 may detect a first object and a second object. In this case, the object detection apparatus 300 may generate and provide information on a distance between the first object and the second object, information on a relative speed between the first object and the second object, and information on a TTC indicating the time remaining before a collision between the first object and the second object.

The vehicle drive apparatus 600 may electrically control driving of various apparatuses in the vehicle 100.

The vehicle drive apparatus 600 may include a power source drive unit 611, a brake drive unit 622, and a steering drive unit 621.

The vehicle drive apparatus 600 may control driving at least one of a power source, a brake apparatus, or a steering apparatus in the vehicle.

Specifically, the power source drive unit 611 may control driving of the power source. The brake drive unit 622 may control driving of the brake apparatus. The steering drive unit 621 may control driving of the steering apparatus.

The controller 170 may receive object information from the object detection apparatus 300.

The controller 170 may acquire motion information of an object. The object detection apparatus 300 may track a detected object to generate motion information of the object. The controller 170 may acquire the motion information of the object from the object detection apparatus 300.

The controller 170 may determine a state of the object based on the object information.

The controller 170 may determine a collision possibility or abnormal traveling of the object based on the motion information of the object.

The controller 170 may provide a signal to the vehicle drive apparatus 600 based on the motion information of the object.

The controller 170 may provide a signal for controlling driving of at least one of the power source, the brake apparatus, or the steering apparatus to the vehicle drive apparatus 600 based on the motion information of the object. The vehicle drive apparatus 600 may control at least one of the power source, the brake apparatus, or the steering apparatus in accordance with the signal provided from the controller 170.

When the object detection apparatus 300 detects a first object and a second object, the controller 170 may acquire first motion information of the first object and second motion information of the second object.

The object detection apparatus 300 may track the detected first object to generate the first motion information of the first object. The controller 170 may receive the first motion information from the object detection apparatus 300.

The object detection apparatus 300 may track the detected second object to generate the second motion information of the second object. The controller 170 may receive the second motion information from the object detection apparatus 300.

The controller 170 may determine a possibility of collision between the first object and the second object, based on the first motion information and the second motion information.

The controller 170 may provide a signal to the vehicle drive apparatus 600 based on the determined possibility of collision between the first object and the second object.

The controller 170 may calculate a TTC indicative of the time remaining before a collision between the first object and the second object, based on a relative distance between the first object and the second object and a relative speed between the first object and the second object.

The controller 170 may determine a possibility of collision between the first object and the second object based on the TTC. For example, when the TTC is equal to or smaller than a reference value, the controller 170 may determine that the first object and the second object possibly collide.

The controller 170 may determine a possibility of collision between the first object and the second object based on field-of-view information of the first object.

The first object may be another vehicle traveling in the vicinity of the vehicle. The controller 170 may acquire field-of-view information of the another vehicle.

The controller 170 may determine whether the second object is hidden by the vehicle 100 from the field of view of the another vehicle.

First, if it is determined that the second object is hidden by the vehicle 100 from the field of view of the another vehicle, the controller 170 may provide a signal to the vehicle drive apparatus 600.

The autonomous vehicle 100 may further include a navigation system 770.

The navigation system 770 may provide navigation information.

The controller 170 may generate a 3D map based on object information provided by the object detection apparatus 300 and navigation information provided by the navigation system 770.

The controller 170 may receive a 3D map or a 2D map from the navigation system 770.

In the case where a 3D map is received, the controller 170 may match the 3D map and object information to thereby generate a 3D map in which the object information is reflected.

In the case where a 2D map is received, the controller 170 may convert the 2D map into a 3D coordinate system and match the 3D coordinate system and object information to thereby generate a 3D map in which the object information is reflected.

The controller 170 may receive 3D map information in which object information is reflected.

The controller 170 may acquire field-of-view information of another vehicle based on positions at the vehicle, the first object, and the second object are located on the 3D map. Based on the positions at which the vehicle, the first object, and the second object are located on the 3D map, the controller 170 may determine whether the second object appears within the field of view of the another vehicle.

The controller 170 may provide a signal to the vehicle drive apparatus 600 in accordance with the determination of the controller 170.

The controller 170 may provide a signal to the vehicle drive apparatus 600 such that the vehicle 100 is positioned on a path of the first object or a path of the second object.

The controller 170 may acquire the path of the first object based on the motion information of the first object. The controller 170 may provide a signal to the vehicle drive apparatus 600 such that the vehicle 100 is positioned on the path of the first object.

In this case, the controller 170 may determine whether to control the vehicle 100 to be positioned on the path of the first object, based on information on a distance between the vehicle 100 and the first object and information a relative speed therebetween. Specifically, when a TTC between the vehicle 100 and the first object is greater than a reference value, the controller 170 may determine to control the vehicle 100 to be positioned on the path of the first object.

The controller 170 may acquire the path of the second object based on the motion information of the second object. The controller 170 may provide a signal to the vehicle drive apparatus 600 such that the vehicle 100 is positioned on the path of the second object.

In this case, based on information on a distance between the vehicle 100 and the second object and information on a relative speed therebetween, the controller 170 may determine whether to control the vehicle 100 to be positioned on the path of the second object. Specifically, when a TTC between the vehicle 100 and the second object is greater than a reference value, the controller 170 may determine to control the vehicle 100 to be positioned on the path of the second object.

In doing so, it is possible to avoid collision between the first object and the second object in advance.

The controller 170 may provide a signal to the vehicle drive apparatus 600 based on presence or absence of an occupant in the vehicle such that the vehicle 100 is positioned on the path of the first object or on the path of the second object. Specifically, when no person is occupant in the vehicle 100, the controller 170 may provide a signal to the vehicle drive apparatus 600 such that the vehicle 100 is positioned on the path of the first object or on the path of the second object.

When the object detection apparatus 300 detects a first other vehicle, the controller 170 may acquire motion information of the first other vehicle.

The object detection apparatus 300 may generate motion information of the first other vehicle by tracking the detected first other vehicle. The controller 170 may receive the motion information from the object detection apparatus 300.

The controller 170 may determine an abnormal traveling state of the first other vehicle based on the motion information.

When it is determined that the first vehicle is traveling abnormally, the controller 170 may provide a signal to the vehicle drive apparatus 600 so as to control traveling of the first other vehicle.

The controller 170 may determine an abnormal traveling state of the first other vehicle based on at least one of information on a degree of speed change made by the first other vehicle or information on a degree of lane change by the first other vehicle.

For example, when the degree of speed change made by the first other vehicle for a reference period of time is equal to or greater than a reference value, the controller 170 may determine that the first other vehicle is traveling abnormally.

For example, when the degree of speed change made by the first other vehicle for a reference period of time is equal to or greater than a reference value, the controller 170 may determine that the first other vehicle is traveling abnormally.

The controller 170 may provide a signal to the vehicle drive apparatus 600 such that the vehicle 100 is positioned on a path of the first other vehicle. In this case, , the controller 170 may provide a signal to the vehicle drive apparatus 600 such that the vehicle 100 decelerates while positioned on the path of the first other vehicle.

In doing so, it is possible to prevent aggressive driving of the first other vehicle.

The autonomous vehicle 100 may further include a communication apparatus 400.

The communication apparatus 400 may communicate with a second other vehicle. In this case, the second other vehicle may be in plural.

The controller 170 may acquire information on the second other vehicle via the communication apparatus 400.

Here, the information on the second other vehicle may include position information, speed information, path information, and traveling state information regarding the second other vehicle.

The controller 170 may provide a signal to the vehicle drive apparatus 600 based on communication with the second other vehicle.

The controller 170 may provide a signal to the vehicle drive apparatus 600 based on communication with the second other vehicle such that the vehicle 100 and the second other vehicle may travel in alignment in a plurality of travel lanes.

Here, the second other vehicle may be a plurality of autonomous vehicles, and the communication apparatus 400 may communicate with the plurality of autonomous vehicles.

Here, the first other vehicle may be a manual vehicle.

In doing so, it is possible to control the first other vehicle indirectly. In particular, if the first other vehicle is driving aggressively or if a criminal is occupant in the first other vehicle, it is possible to control the first other vehicle indirectly, preventing a traffic accident.

Meanwhile, the controller 170 may include an object information acquisition unit 171, a determination unit 172, a control signal provision unit 173, and a 3D map generation unit 174.

The object information acquisition unit 171 may receive object information from the object detection apparatus 300.

The object information acquisition unit 171 may acquire motion information of an object.

The object information acquisition unit 171 may acquire first motion information of a first object and second motion information of a second object.

When the object detection apparatus 300 detect a first other vehicle, the determination unit 172 may acquire motion information of the first other vehicle.

The object information acquisition unit 171 may acquire information on a second other vehicle via the communication apparatus 400.

The determination unit 172 may determine a state of an object based on object information.

Based on motion information of an object, an object collision probability or abnormal traveling of the object may be determined.

The determination unit 172 may determine a possibility of collision between the first object and the second object based on the first motion information and the second motion information.

Specifically, the determination unit 172 may calculate the time remaining before the collision between the object and the second object, based on a relative distance between the first object and the second object and a relative speed between the first object and the second object.

The determination unit 172 may determine a possibility of collision between the first object and the second object based on a TTC. For example, when the TTC is equal to or smaller than a reference value, the determination unit 172 may determine that the first object and the second object collides with each other.

The first object may be another vehicle traveling in the vicinity of the vehicle. The determination unit 172 may acquire field-of-view information of the another vehicle.

The determination unit 172 may determine whether the second object is hidden by the vehicle 100 from the field of view of the another vehicle.

The 3D map generation unit 174 may generate a 3D map based on object information provided by the object detection apparatus 300 and navigation information provided by the navigation system 770.

The 3D map generation unit 174 may receive a 3D map or a 2D map from the navigation system 770.

In the case where a 3D map is generated, the 3D map generation unit 174 may match the 3D map and object information to generate a 3D map in which the object information is reflected.

In the case where a 2D map is generated, the 3D map generation unit 174 may convert the 2D map into a 3D coordinate system and match the 3D coordinate system and object information to thereby generate a 3D map in which the object information is reflected.

The determination unit 172 may receive information on a 3D map, in which an object is reflected, generated by the 3D map generation unit 174.

The determination unit 172 may acquire field-of-view information of the another vehicle based on positions at which the vehicle 100, the first object, and the second object are located on the 3D map.

The determination unit 172 may determine whether the second object does not appear within the field of view for the another vehicle, based on the positions at which the vehicle 100, the first object, and the second object are located on the 3D map.

The determination unit 172 may determine whether the first other vehicle is traveling abnormally, based on the motion information of the first other vehicle.

The determination unit 172 may determine whether the first other vehicle is traveling abnormally, based on at least one of information on a degree of speed change made by the first other vehicle or information on a degree of lane change made by the first other vehicle. For example, when the degree of speed change made by the first other vehicle for a reference period of time is equal to or greater than a reference value, the determination unit 172 may determine that the first other vehicle is traveling abnormally. For example, when the degree of speed change made by the first other vehicle for a reference period of time is equal to or greater than a reference value, the determination unit 172 may determine that the first other vehicle is traveling abnormally.

The control signal provision unit 173 may provide a signal to the vehicle drive apparatus 600 based on the determination by the determination unit 172.

The control signal provision unit may provide a signal to the vehicle drive apparatus based on the determined possibility of collision between the first object and the second object.

When it is determined that the second object is completely hidden by the vehicle 100 from the field of view of the another vehicle, the control signal provision unit 173 may provide a signal to the vehicle drive apparatus 600.

The control signal provision unit 173 may provide a signal to the vehicle drive apparatus 600 such that the vehicle 100 is positioned on a path of the first object or a path of the second object.

The control signal provision unit 173 may provide a signal to the vehicle drive apparatus 600 based on a determination as to abnormal traveling of the first other vehicle.

The control signal provision unit 173 may provide a signal to the vehicle drive apparatus 600 such that the vehicle 100 is positioned on the path of the first other vehicle. In this case, the control signal provision unit 173 may provide a signal to the vehicle drive apparatus 600 such that the vehicle 100 decelerates while positioned on the path of the first other vehicle.

The control signal provision unit 173 may provide a signal to the vehicle drive apparatus 600 based on communication with the second other vehicle.

The control signal provision unit 173 may provide a signal to the vehicle drive apparatus 600 based on communication with the second other vehicle such that the vehicle 100 and the second other vehicle travel in alignment on a plurality of travel lanes.

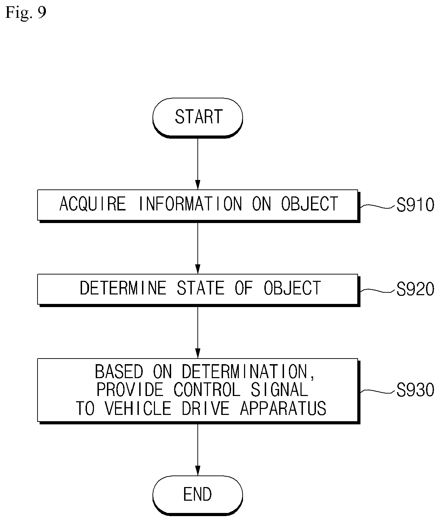

FIG. 9 is a flowchart referred to in the description of operation of an autonomous vehicle according to an embodiment of the present invention.

Referring to FIG. 9, the controller 170 may acquire object information (S910).

The object information may include information on the presence of an object, location information of the object, information on a distance between the vehicle 100 and the object, and information on a relative speed between the vehicle 100 and the object.

The object information may include motion information of the object.

The controller 170 may determine a state of the object based on the object information (S920)

The controller 170 may determine a possibility of collision of the object based on the motion information of the object.

The controller 170 may determine abnormal traveling of the object based on the motion information of the object.

The controller 170 may provide a signal to the vehicle drive apparatus 600 based on the determination (S930).

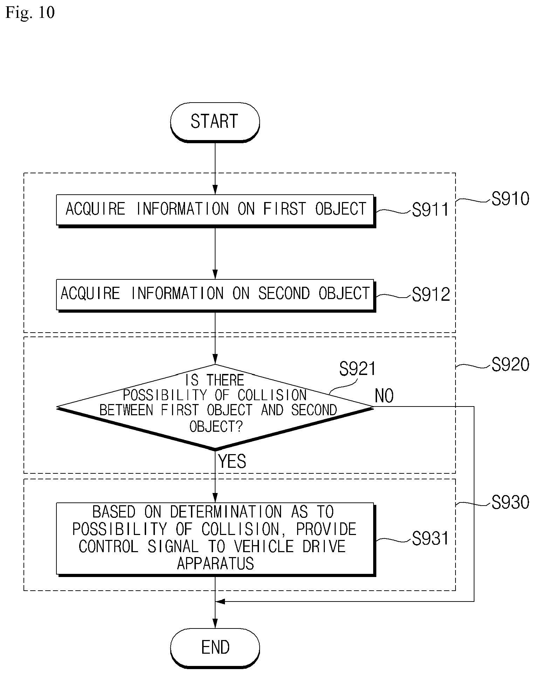

FIG. 10 is a flowchart referred to in the description of operation of an autonomous vehicle according to an embodiment of the present invention.

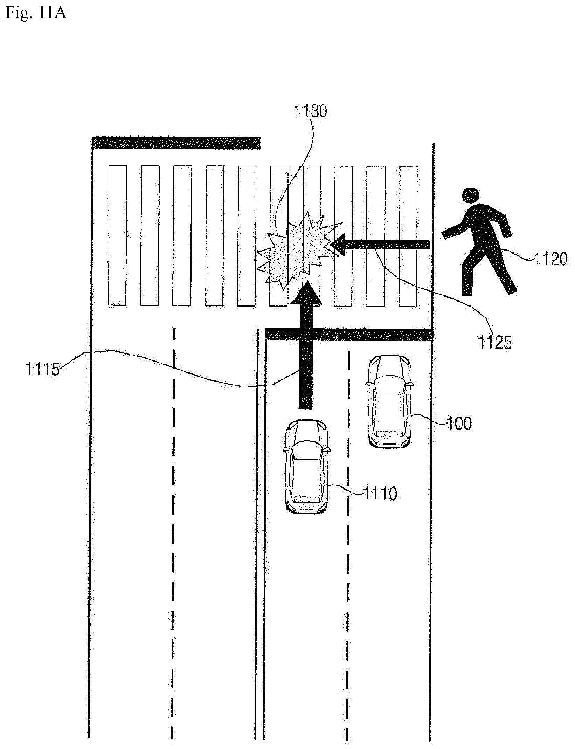

FIG. 11A to 12 are diagrams illustrating situations referred to in the description of operation of an autonomous vehicle according to an embodiment of the present invention.

Referring to FIGS. 10 to 12, a step (S910) of acquiring an object may include a step (S911) of acquiring information on a first object 1110 and a step (S912) of acquiring information on a second object 1120.

The controller 170 may acquire the information on the first object 1110 (S911). Here, the information on the first object 1110 may include motion information of the first object 1110. The first object 1110 may be another vehicle in the vicinity of the vehicle 100.

The controller 170 may acquire the information on the second object 1120 (S912). Here, the information on the second object 1120 may include motion information of the second object 1120. The second object 1120 may be another vehicle, a structure, a geographical feature, or a person, which is located in the vicinity of the vehicle 100.

A step (S920) of determining a state of an object may include a step (S921) of determining a possibility of collision between the first object 1110 and the second object 1120.

The controller 170 may determine the possibility of collision between the first object 1110 and the second object 1120 (S921).

As shown in FIG. 11A, the controller 170 may receive information on a predicted path of the first object 1110 from the object detection apparatus 300. The information on the predicted path of the first object 1110 may be generated based on a motion vector of the first object 1110.

The controller 170 may receive information on a predicted path of the second object 1120 from the object detection apparatus 300. The information on the predicted path of the second object 1120 may be generated based on a motion vector of the second object 1120.

The controller 170 may receive information on a relative distance between the first object 1110 and the second object 1120 from the object detection apparatus 300.

The controller 170 may receive information on a relative speed between the first object 1110 and the second object 1120 from the object detection apparatus 300.

The controller 170 may calculate a TTC indicative of the time remaining before a collision between the first object 1110 and the second object 1120, based on the information between the relative distance and the information on the relative speed information.

The controller 170 may determine a possibility of collision between the first object 1110 and the second object 1120 based on the TTC. For example, when the TTC is equal to or smaller than a reference value, the controller 170 may determine that the first object 1110 and the second object 1120 possibly collide with each other.

Meanwhile, the controller 170 may generate a virtual trace 1115 of the first object 1110 based on the motion vector of the first object 1110. Here, the virtual trace 1115 of the first object 1110 may be referred to as a first virtual trace.

The controller 170 may generate a virtual trace 1125 of the second object 1120 based on the motion vector of the second object 1120. Here, the virtual trace 1125 of the second object 1120 may be referred to as a second virtual trace.

The controller 170 may determine a point of intersection between the first virtual trace 1115 and the second virtual trace 1125 as a predicted point of collision 1130.

The controller 170 may determine a point in time when the collision possibly occurs at the predicted point of collision 1130, based on the TTC indicative of the time remaining before the collision between the first object 1110 and the second object 1120.

A time required for at least one of the first object 1110 or the second object 1120 to move to the predicted point of collision 1130 may exceed 0 second.

If the time required for at least one of the first object 1110 or the second object 1120 to move to the predicted point of collision 1130 is 0 second, the collision may have already occurred.

In some embodiments, the collision may occur as the second object 1120 moves while the first object 1110 is located at the predicted point of collision 1130. In this case, a time for the first object 1110 to move to the predicted point of collision 1130 is 0. The controller 170 may calculate a TTC indicative of the time remaining before the collision, based on a time required for the second object 1120 to move to the predicted point of collision 1130.

In some embodiments, the collision may occur as the first object 1110 moves while the second object 1120 is located at the predicted point of collision 1130. In this case, the time required for the second object 1110 to move to the predicted point of collision 1130 is 0. The controller 170 may calculate a TTC indicative of the time remaining before the collision, based on the time required for the first object 1110 to move to the predicted point of collision 1130.

In some embodiments, the collision may occur as the first object 1110 and the second object 1120 moves together. The controller 170 may calculate a TTC indicative of the time remaining before the collision, based on a relative distance between the first object 1110 and the second object 1120 and a relative speed therebetween.

Meanwhile, the controller 170 may output the first virtual trace 1115 and the second virtual trace 1125 through a user interface apparatus 200.

For example, the controller 170 may display the first virtual trace 1115 and the second virtual trace 1125 through a display unit 251.

The controller 170 may display a predicted point of collision, at which the first virtual trace 1115 and the second virtual trace 1125 intersects each other, through the display unit 251.

Through the display unit 251, the controller 170 may display an estimated time remaining before collision between the first object 1110 and the second object 1120 at the predicted point of collision 1130. For example, the controller 170 may display the estimated time remaining before the collision in a countdown manner.

Based on a time required for the first object 1110 or the second object 1120 to move to the predicted point of collision 1130, the controller 170 may determine whether to control the vehicle 100 to be positioned on the path of the first object 1110 or on the path of the second object 1120.

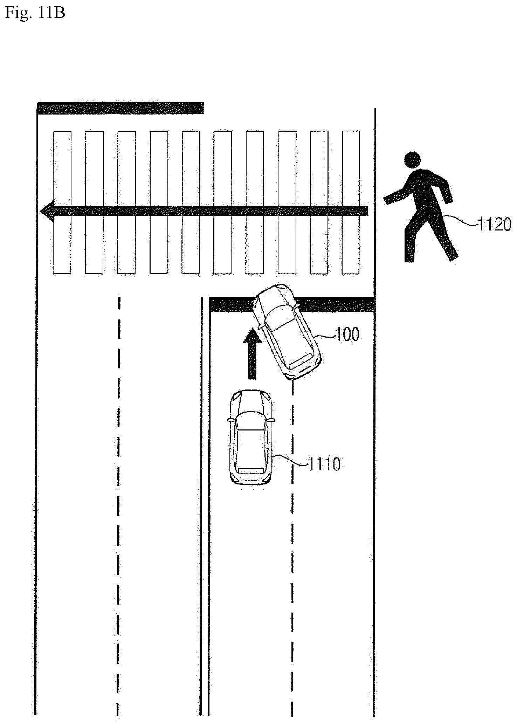

For example, if it is determined that it takes a longer time for the first object 1110 than for the second object 1120 to arrive at the predicted point of collision 1130, the controller 170 may provide a control signal to the vehicle drive apparatus 600 such that the vehicle 100 is positioned on the first virtual trace, as shown in FIG. 11B. In this case, the controller 170 may move at a reference speed or lower while spaced a reference distance or more from the first object 1110. In doing so, it is possible to prevent collision between the first object 1120 and the vehicle 100 and let the vehicle 100 appear within the field of view of the first object 1110.

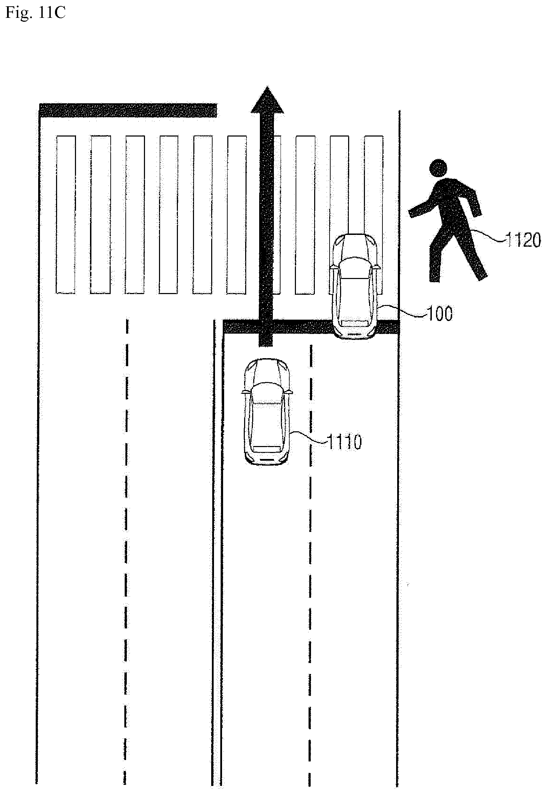

For example, if it is determined that it takes a longer time for the second object 1120 than for the first object 1110 to arrive at the predicted point of collision 1130, the controller 170 may provide a control signal to the vehicle drive apparatus 600 such that the vehicle 100 is positioned on the second virtual trace, as shown in FIG. 11C. In this case, the controller 170 may move at a reference speed or lower while spaced a reference distance or more from the second object 1120. In doing so, it is possible to prevent collision between the second object 1120 and the vehicle 100 and let the vehicle 100 appear within the field of view of the second object 1120.

Based on a distance between the vehicle 100 and the first virtual trace or a distance between the vehicle 100 and the second virtual trace, the controller 170 may determine whether to control the vehicle 100 to be positioned on the path of the first object 1110 or on the path of the second object 1120.

For example, if the distance between the vehicle 100 and the first virtual trace is shorter than the distance between the vehicle 100 and the second virtual trace, the controller 170 may provide a control signal to the vehicle drive apparatus 600 such that the vehicle 100 is positioned on the first virtual trace.

For example, if the distance between the vehicle 100 and the second virtual trace is shorter than the distance between the vehicle 100 and the first virtual trace, the controller 170 may provide a control signal to the vehicle drive apparatus 600 such that the vehicle 100 is positioned on the path of the second virtual trace.

Meanwhile, the controller 170 may determine a possibility of collision between the first object 1110 and the second object 1120 based on field-of-view information of the first object 1110.

The controller 170 may determine whether the second object 1120 is hidden by the vehicle 100 from a field of view of another vehicle.

If it is determined that the second object 1120 is hidden by the vehicle 100 from the field of view of the another vehicle, the controller 170 may provide a signal to the vehicle drive apparatus 600.

The controller 170 may generate a 3D map based on object information provided by the object detection apparatus 300 and navigation information provided by the navigation system 770.

The controller 170 may acquire field-of-view information of the another vehicle, based on positions at which the vehicle, the first object 1110, and the second object 1120 are located on the 3D map. Based on the positions at which the vehicle, the first object 1110, and the second object 1120 are located on the 3D map, the controller 170 may determine whether the second object 1120 appear within the field of view of another vehicle.

A step (S930) of providing a control signal to the vehicle drive apparatus 600 may include a step (S931) of providing a control signal to the vehicle drive apparatus 600 based on a determination as to a possibility of collision. Based on the determination as to a possibility of collision, the controller 170 may provide a control signal to the vehicle drive apparatus 600 (S931).

Based on the determination as to a possibility of collision, the controller 170 may provide a control signal to the vehicle drive apparatus 600 such that collision between the first object 1110 and the second object 1120 does not occur.

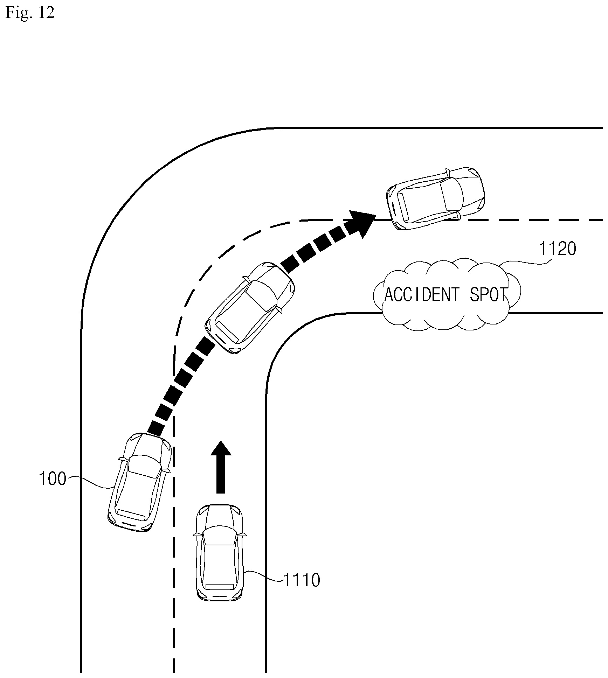

As shown in FIG. 11B or FIG. 12, the controller 170 may provide a control signal to the vehicle drive apparatus 600 such that the vehicle 100 is positioned on the path of the first object 1110.

In this case, based on information on a distance between the vehicle 100 and the first object 1110 and information on a relative speed therebetween, the controller 170 may determine whether to control the vehicle 100 to be positioned on the path of the first object 1110. Specifically, when a TTC between the vehicle 100 and the first object 1110 is equal to or greater than a reference value, the controller 170 may determine to control the vehicle 100 to be positioned on the path of the first object 1110.

In doing so, only in the case where the first object 1110 is allowed to recognize the vehicle 100 and accordingly decelerate or stop, the vehicle 100 is controlled to be positioned on the path of the first object 1110 and therefore it is possible to minimize any potential damages to the vehicle 100.

As shown in FIG. 11C, the controller 170 may provide a control signal to the vehicle drive apparatus 600 such that the vehicle 100 is controlled to be positioned on the path of the second object 1120.

In this case, based on information on a distance between the vehicle 100 and the second object 1120 and information on a relative speed therebetween, the controller 170 may determine whether to control the vehicle 100 to be positioned on the path of the second object 1120. Specifically, when a TTC between the vehicle 100 and the second object 1120 is greater than a reference value, the controller 170 may determine to control the vehicle 100 to be positioned don the path of the second object 1120.

In doing so, only in the case where the second object 1120 is allowed to recognize the vehicle 100 and accordingly decelerate or stop, the vehicle 100 is controlled to be positioned on the path of the second object 1120 and therefore it is possible to minimize any potential damages to the vehicle 100.

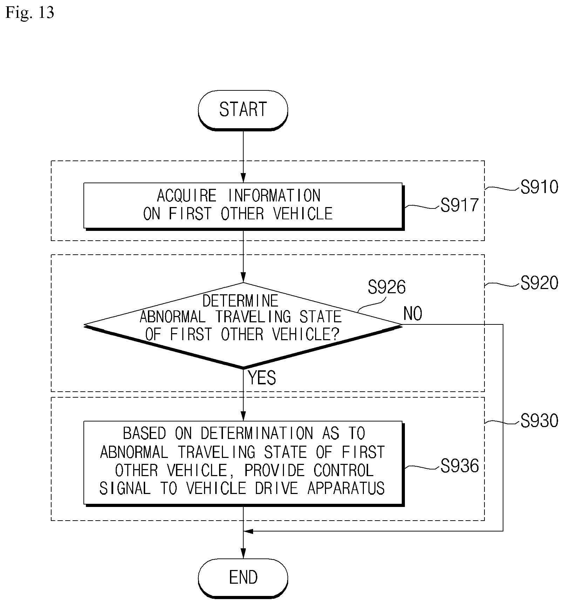

FIG. 13 is a flowchart referred to in the description of operation of an autonomous vehicle according to an embodiment of the present invention.

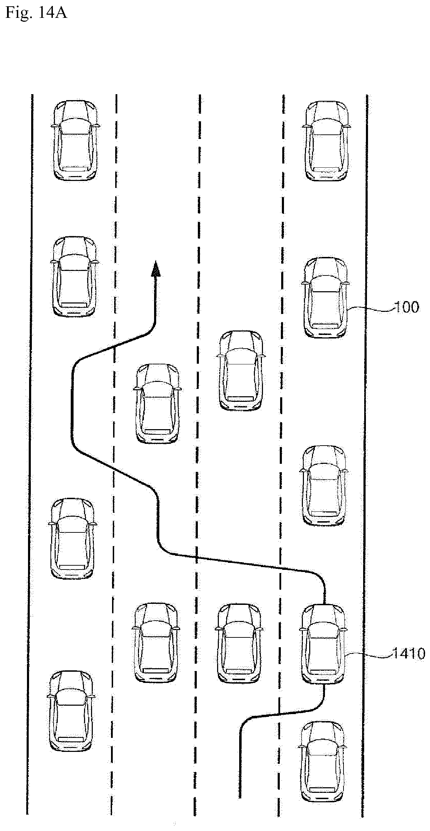

FIGS. 14A to 14B are diagrams illustrating situations referred to in the description of operation of an autonomous vehicle according to an embodiment of the present invention.

Referring to FIGS. 13 to 14B, a step (S910) of acquiring an object may include a step (S917) of acquiring information on a first other vehicle 1410.

The controller 170 may acquire the information on the first other vehicle 1410 (S917). Here, the information on the first other vehicle 1410 may include motion information of the first other vehicle 1410.

A step (S920) of determining a state of the object may include a step (S926) of determining an abnormal traveling state of the first other vehicle 1410.

The controller 170 may determine an abnormal traveling state of the first other vehicle 1410 based on the motion information of the first other vehicle 1410. (S926)

As shown in FIG. 14A, the controller 170 may determine an abnormal traveling state of the first other vehicle 1410, based on information on the number of times of speed change made by the first other vehicle 1410.

For example, if the number of times of speed change made by the first other vehicle 1410 for a reference period of time is equal to or greater than a reference value, the controller 170 may determine that the first other vehicle 1410 is traveling abnormally.

Meanwhile, the first other vehicle 1410 may be a manual vehicle.

The controller 170 may determine an abnormal traveling state of the first other vehicle 1410, based on information on the number of times of lane change made by the first other vehicle 1410.

For example, if the number of times of lane change made by the first other vehicle 1410 for a reference period of time is equal to or greater than a reference value, the controller 170 may determine that the first other vehicle 1410 is traveling abnormally.

A step (S930) of providing a control signal to the vehicle drive apparatus 600 may include a step (S936) of providing a control signal to the vehicle drive apparatus 600 based on a determination as to an abnormal traveling state of the first other vehicle 1410.

The controller 170 may provide a control signal to the vehicle drive apparatus 600 based on a determination as to an abnormal traveling state of the first other vehicle 1410 (S936).

Based on the determination as to an abnormal traveling state of the first other vehicle 1410, the controller 170 may provide a control signal to the vehicle drive apparatus 600 to control traveling of the first other vehicle 1410.

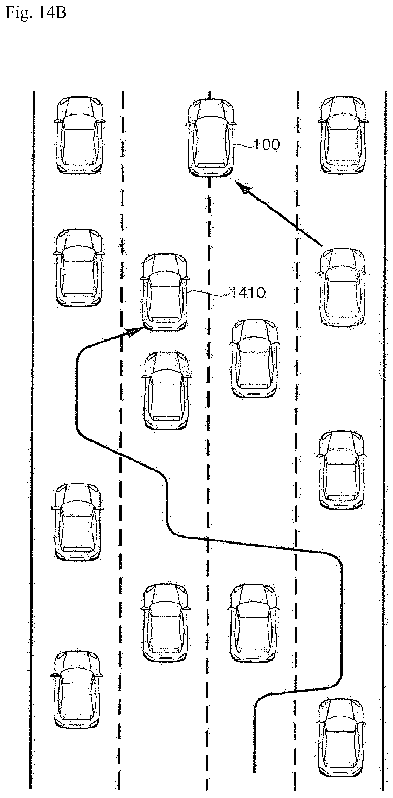

As shown in FIG. 14B, the controller 170 may provide a control signal to the vehicle drive apparatus 600 such that the vehicle 100 is positioned on the path of the first other vehicle 1410.

In this case, the controller 170 may provide a control signal to the vehicle drive apparatus 600 such that the vehicle 100 decelerates while positioned on the path of the first other vehicle 1410.

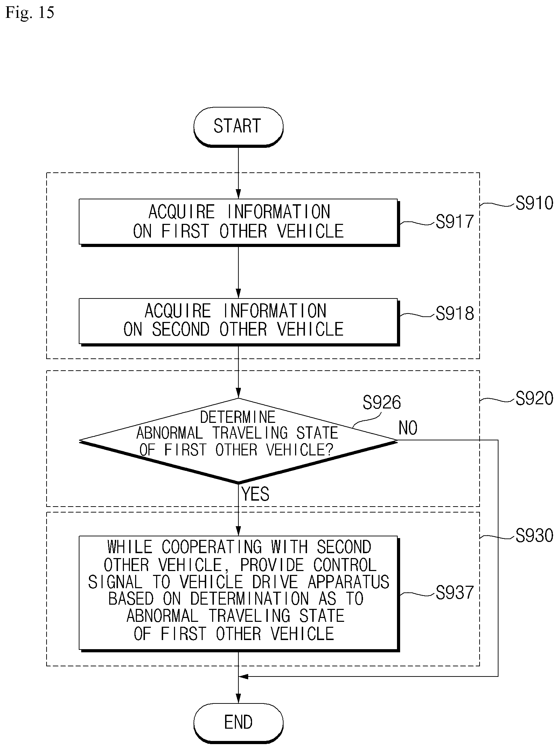

FIG. 15 is a flowchart referred to in the description of operation of an autonomous vehicle according to an embodiment of the present invention.

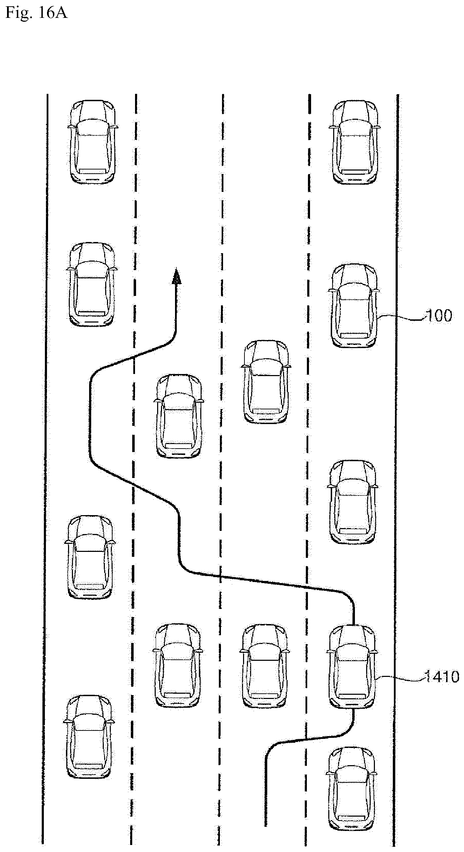

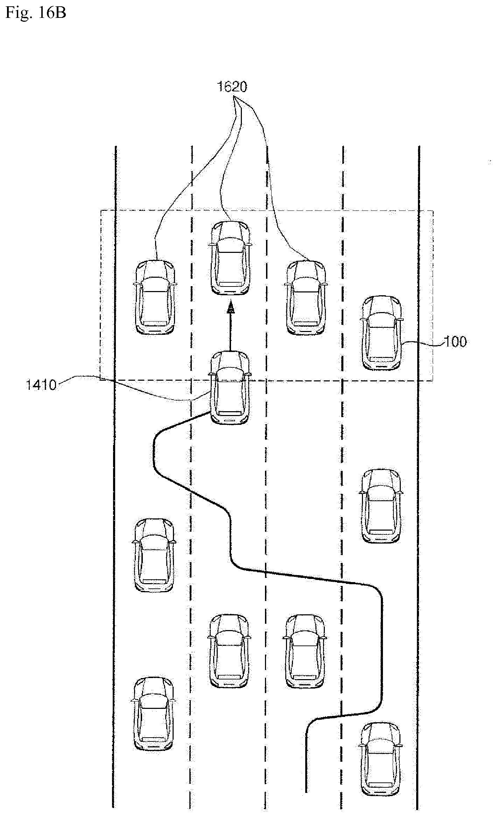

FIGS. 16A and 16B are diagrams showing situations referred to in the description of operation of an autonomous vehicle according to an embodiment of the present invention.

Referring to FIGS. 15 to 16B, a step (S910) of acquiring an object further include a step (S917) of acquiring information on the first other vehicle 1410 and a step (S918) of acquiring information on a second other vehicle 1620.

The controller 170 may acquire the information on the first other vehicle 1410 (S917). Here, the information on the first other vehicle 1410 may include motion information of the first other vehicle 1410.

The controller 170 may acquire the information on the second other vehicle 1620 (S918). The controller 170 may acquire the information on the second other vehicle 1620 through the object detection apparatus 3000 or the communication apparatus 400.

Here, the second other vehicle 1620 may be another autonomous vehicle. The second other vehicle 1620 may be in plural.

The information on the second other vehicle 1620 may include location information, speed information, path information, and traveling state information regarding the second other vehicle 1620.

A step (S920) of acquiring a state of an object may include a step (S926) of determining an abnormal traveling state of the first other vehicle 1410.

The controller 170 may determine an abnormal traveling state of the first other vehicle 1410 based on the motion information of the first other vehicle 1410 (S926).

The step (S926) of determining an abnormal traveling state of the first other vehicle 1410 is the same as the step (S926) of determining an abnormal traveling state of the first other vehicle 1410 described in FIGS. 13 to 14B, and thus, a detailed description thereof is herein omitted.

A step (S930) of providing a control signal to the vehicle drive apparatus 600 may include a step (S937) of providing a control signal to the vehicle drive apparatus 600 based on a determination as to an abnormal traveling state of the first other vehicle 1410, while cooperating with the second other vehicle 1620.

The controller 170 may provide a control signal to the vehicle drive apparatus 600 based on the determination as to an abnormal traveling state of the first other vehicle 1410, while cooperating with the second other vehicle 1620 (S937).

As shown in FIG. 16B, the controller 170 may provide a control signal to the vehicle drive apparatus 600 based on communication with the second other vehicle 1620 such that the vehicle 100 and the second other vehicle 1620 travel in alignment.

Thereafter, the controller 170 may exchange signals with the second other vehicle 1620 via the communication apparatus 400 to decelerate together with the second other vehicle 1620.

In addition, the controller 170 may provide a control signal to the vehicle drive apparatus 600 to decelerate together with the second other vehicle 1620.

As such, since the vehicle 100 and the second other vehicle 1620 travel in alignment, a barricade may be formed.

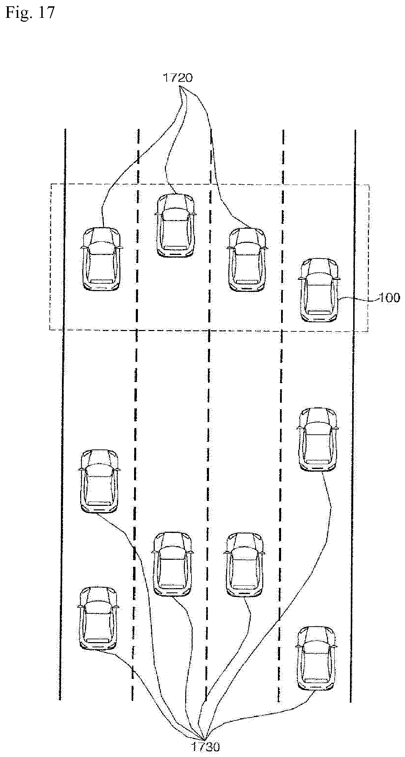

FIG. 17 is a diagram illustrating a situation referred to in the description of operation of an autonomous vehicle according to an embodiment of the present invention.

Referring to FIG. 17, the vehicle 100 may communicate with a plurality of other autonomous vehicles 1720 via the communication apparatus 400.

The vehicle 100 may control a driving condition on a roadway by cooperating with the plurality of other autonomous vehicles 1720 via the communication apparatus 400.

For example, when an accident has occurred ahead of the vehicle 100, the controller 170 may acquire accident occurrence information via the object detection apparatus 300 or the communication apparatus 400.

In this case, a manual vehicle 1730 is not able to acquire the accident information, which may lead to a secondary accident.

The controller 170 may provide a control signal to the vehicle drive apparatus 600 such that the vehicle 100 travels in alignment with the plurality of other autonomous vehicles 1720 on a plurality of lanes while cooperating with the plurality of other autonomous vehicles 1720.

As such, since the vehicle 100 and the plurality of other autonomous vehicles 1720 travel in alignment, a barricade may be formed.

The controller 170 may communicate with the plurality of other autonomous vehicles 1720 via the communication apparatus 400 to determine lanes to be occupied by the vehicle 100 and the plurality of other autonomous vehicles 1720.

Thereafter, the controller 170 may exchange signals with the plurality of other autonomous vehicles 1720 via the communication apparatus 400 to decelerate together with the plurality of other autonomous vehicles 1720.

In addition, the controller 170 may provide a control signal to the vehicle drive apparatus 600 to decelerate together with the plurality of other autonomous vehicles 1720.

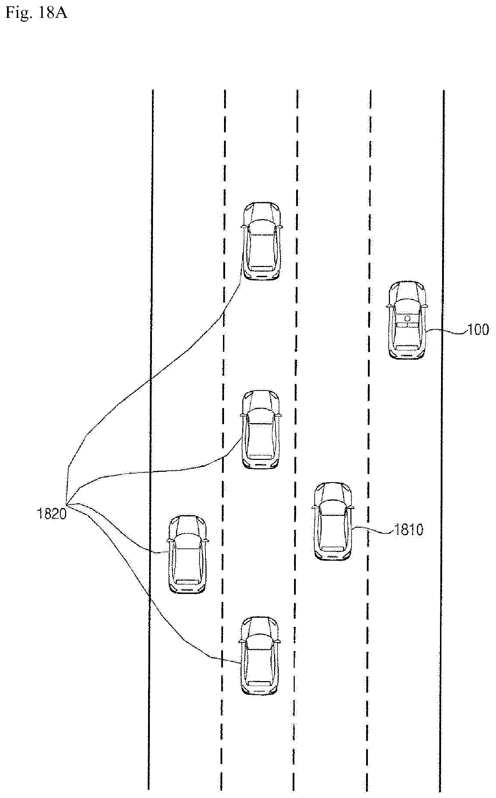

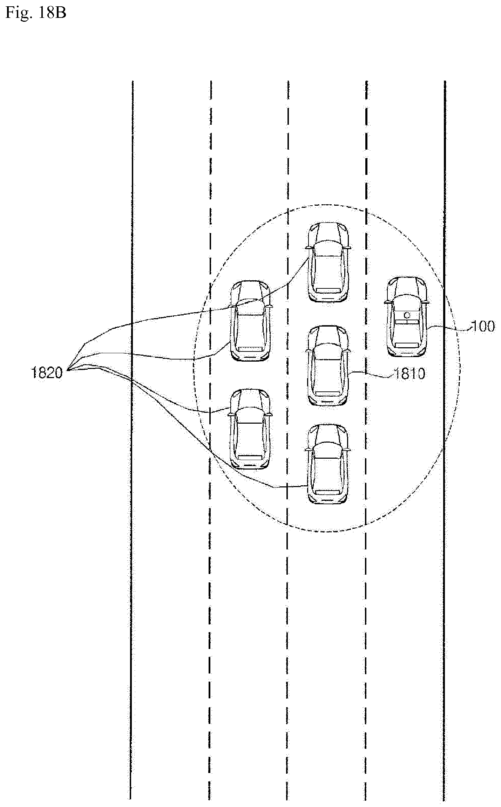

FIGS. 18A and 18B are diagrams illustrating situations referred to in the description of operation of an autonomous vehicle according to an embodiment of the present invention.

In the following description, it will be assumed that the vehicle 100 is a police car.

Referring to FIGS. 18A and 18B, the vehicle 100 may detect and chase a first other vehicle 1810. Here, the first other vehicle 1810 may be a vehicle in which a criminal is occupant. The first other vehicle 1810 may be a manual vehicle.

The vehicle 100 may communicate with a plurality of other autonomous vehicles 1820 via the communication apparatus 400.

The vehicle 100 may control traveling of the first other vehicle 1810 indirectly by cooperating with the plurality of other autonomous vehicles 1820 via the communication apparatus 400.

The controller 170 may provide a control signal to the vehicle drive apparatus 600 to surround the first other vehicle 1810 by cooperating with the plurality of other autonomous vehicles 1820.

As such, since the vehicle 100 and the plurality of other autonomous vehicles 1820 surround the first other vehicle 1810, a barricade may be formed.

The controller 170 may communicate with the plurality of other autonomous vehicles 1820 via the communication apparatus 400 to determine positions for the vehicle 100 and for the plurality of other autonomous vehicles 1820.

Thereafter, the controller 170 may exchange signals with the plurality of other autonomous vehicles 1820 via the communication apparatus 400 to decelerate together with the plurality of other autonomous vehicles 1820.

In addition, the controller 170 may provide a control signal to the vehicle drive apparatus 600 to decelerate together with the plurality of other autonomous vehicles 1820.

In doing so, it is possible to control traveling of the first other vehicle 1810 indirectly.

The foregoing present disclosure may be implemented as codes readable by a computer on a medium written by the program. The computer-readable media includes all types of recording devices in which data readable by a computer system can be stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may a processor or a controller. The foregoing description is merely exemplary and are not to be considered as limiting the present disclosure. The scope of the invention should be determined by reasonable interpretation of the appended claims and all changes that come within the equivalent scope of the invention are included in the scope of the invention.

## Claims

1. An autonomous vehicle, comprising:
an object detection apparatus configured to detect an object in a vicinity of the vehicle;
a vehicle drive apparatus configured to control driving of at least one of a power source, a brake apparatus, or a steering apparatus in the vehicle; and
a controller configured to acquire motion information of the object, and provide a signal to the vehicle drive apparatus based on the motion information to control driving of the at least one of the power source, the brake apparatus, or the steering apparatus.

2. The autonomous vehicle of claim 1,
wherein the object detection apparatus is further configured to detect a first object and a second object, and
wherein the controller is further configured to:
acquire first motion information of the first object and second motion information of the second object;
determine a possibility of collision between the first object and the second object based on the first motion information and the second motion information; and
provide the signal to the vehicle drive apparatus based on the possibility of collision.

3. The autonomous vehicle of claim 2, wherein the controller is further configured to determine the possibility between the first object and the second object based on a relative distance between the first object and the second object and a relative speed between the first object and the second object.

4. The autonomous vehicle of claim 2,
wherein the first object is another vehicle traveling in the vicinity of the vehicle, and
wherein the controller is further configured to:
acquire field-of-view information of the another vehicle; and
when the second object is hidden by the vehicle from a field of view of the another vehicle, provide the signal to the vehicle drive apparatus.

5. The vehicle of claim 4, further comprising a navigation system configured to provide navigation information,
wherein the controller is further configured to:
generate a 3D map based on object information provided by the object detection apparatus and the navigation information; and
acquire the field-of-view information of the another vehicle, based on positions at which the vehicle, the first object, and the second object are located on the 3D map.

6. The autonomous vehicle of claim 5, wherein the controller is further configured to provide the signal to the vehicle drive apparatus such that the vehicle is positioned on a path of the first object or on a path of the second object.

7. The autonomous vehicle of claim 1,
wherein the object detection apparatus is further configured to detect a first other vehicle, and
wherein the controller is further configured to:
acquire motion information of the first other vehicle;
based on the motion information, determine whether the first other vehicle is traveling abnormally; and
when it is determined that the first other vehicle is travelling abnormally, provide the signal to the vehicle drive apparatus.

8. The autonomous vehicle of claim 7, wherein the controller is further configured to determine whether the first other vehicle is traveling abnormally, based on at least one of information on a degree of speed change made by the first other vehicle or information on a degree of lane change made by the first other vehicle.

9. The autonomous vehicle of claim 8, wherein the controller is further configured to provide the signal to the vehicle drive apparatus such that the vehicle is positioned on a path of the first other vehicle.

10. The autonomous vehicle of claim 9, wherein the controller is further configured to provide the signal to the vehicle drive apparatus such that the vehicle decelerates while positioned on the path of the first other vehicle.

11. The autonomous vehicle of claim 7, further comprising a communication apparatus configured to communicate with a second other vehicle,
wherein the controller is further configured to:
acquire information on the second other vehicle; and
provide the signal to the vehicle drive apparatus based on the communication with the second other vehicle.

12. The autonomous vehicle of claim 11, wherein the controller is further configured to, based on the communication with the second other vehicle, provide the signal to the vehicle drive apparatus such that the vehicle and the second other vehicle travel in alignment on a plurality of travel lanes.

13. The autonomous vehicle of claim 11,
wherein the second other vehicle is a plurality of autonomous vehicles, and
wherein the communication apparatus communicates with the plurality of autonomous vehicles.

14. The autonomous vehicle of claim 13, wherein the first other vehicle is a manual vehicle.

15. An operating method of an autonomous vehicle, the method comprising:
detecting an object in a vicinity of the vehicle;
acquiring motion information of the object; and
controlling driving of at least one of a power source, a brake apparatus, and a steering apparatus based on the motion information.
